(19) Europäisches Patentamt
European Patent Office
Office européen des brevets

(11) **EP 2 681 433 B1**

(12) **EUROPÄISCHE PATENTSCHRIFT**

(45) Veröffentlichungstag und Bekanntmachung des Hinweises auf die Patenterteilung:
**20.07.2016 Patentblatt 2016/29**

(21) Anmeldenummer: **12703062.5**

(22) Anmeldetag: **02.02.2012**

(51) Int Cl.:
*F02D 41/38* (2006.01)    *F02M 63/02* (2006.01)

(86) Internationale Anmeldenummer:
**PCT/EP2012/051739**

(87) Internationale Veröffentlichungsnummer:
**WO 2012/116871 (07.09.2012 Gazette 2012/36)**

(54) **VERFAHREN ZUM BESTIMMEN EINER TEMPERATUR VON KRAFTSTOFF**

METHOD FOR DETERMINING A TEMPERATURE OF FUEL

PROCÉDÉ POUR DÉTERMINER UNE TEMPÉRATURE DE CARBURANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2011 DE 102011005061**
**13.01.2012 DE 102012200457**

(43) Veröffentlichungstag der Anmeldung:
**08.01.2014 Patentblatt 2014/02**

(73) Patentinhaber: **Robert Bosch GmbH**
**70442 Stuttgart (DE)**

(72) Erfinder: **HEINRICH, Andreas**
**71334 Waiblingen (DE)**

(56) Entgegenhaltungen:
**DE-A1-102007 053 408     US-A- 4 082 066**
**US-A1- 2010 125 400**

**Beschreibung**

Die Erfindung betrifft ein Verfahren und eine Anordnung zum Bestimmen einer Temperatur von Kraftstoff.

Stand der Technik

Bislang wird die Temperatur des Kraftstoffs in einer Einspritzanlage, die als Common-Rail-System ausgebildet ist und deren Steuergerät eine Information über die Temperatur benötigt, durch einen Temperatursensor, der im Zulauf der Einspritzanlage eingebaut ist, ermittelt. Mit der für den Kraftstoff ermittelten Temperatur ist es möglich, die Einspritzung einer Kraftstoffmenge zu einem bestimmten Zeitpunkt mit der erforderlichen Genauigkeit sicherzustellen.

Die Druckschrift DE 199 46 910 A1 beschreibt ein Verfahren und eine Einrichtung zur Ermittlung der Temperatur des Kraftstoffs in einem Common-Rail-System mit einer sauggedrosselten Hochdruckpumpe und einer Zumesseinheit, die einen Stellkolben elektromagnetisch betätigt und einen Strömungsquerschnitt variiert, so dass der Hochdruckpumpe Kraftstoff zugemessen wird. Hierbei wird die Temperatur des Kraftstoffs niederdruckseitig am Zulauf der Zumesseinheit und hochdruckseitig am Ausgang der Hochdruckpumpe über eine stationäre Energiebilanzgleichung mit den beteiligten Wärmeströmen rechnerisch ermittelt.

Ein Verfahren zum Berechnen einer Temperatur des Kraftstoffs in einem Zulauf eines Einspritzsystems eines Kraftfahrzeugs ist aus der Druckschrift DE 10 2008 014 085 A1 bekannt. Hierzu wird eine Berechnungseinheit, die dazu geeignet ist, die Temperatur des Kraftstoffs in Abhängigkeit eines spulentemperaturabhängigen Ist-Stroms durch eine Spule einer Zumesseinheit für eine Common-Rail-Pumpe und eines bestimmten Offset-Werts zwischen der Temperatur des Kraftstoffs und der Temperatur der Spule zu berechnen, verwendet.

Die Druckschrift US-2010/0125400 offenbart ein weiteres Verfahren zum Bestimmen einer Temperatur von Kraftstoff in einer Einspritzanlage.

Offenbarung der Erfindung

Vor diesem Hintergrund werden ein Verfahren und eine Anordnung mit den Merkmalen der unabhängigen Patentansprüche vorgestellt. Weitere Ausgestaltungen der Erfindung ergeben sich aus den abhängigen Patentansprüchen und der Beschreibung.

Bei Durchführung des vorgestellten Verfahrens erfolgt eine Nutzung der Zumesseinheit (ZME) in Verbindung mit ihrer Ansteuerung zur Ermittlung der Temperatur des Kraftstoffs einer Einspritzanlage, die bspw. als Common-Rail-System ausgebildet sein kann.

Dabei wird über eine Betrachtung und/oder Berücksichtigung des Widerstands sämtlicher Bauteile eines Stromkreises der Zumesseinheit der Widerstand der Spule der Zumesseinheit extrahiert und daraus die Temperatur der Spule berechnet. Aufgrund der Temperatur der Spule wird schließlich die Temperatur des Kraftstoffs berechnet.

In Ausgestaltung werden üblicherweise die Widerstände und somit die thermischen Abhängigkeiten aller im Stromkreis der Zumesseinheit vorhandenen Bauteile berücksichtigt. Somit werden elektrische Widerstände verschiedener Bauteile des Stromkreises der Zumesseinheit, typischerweise der Spule, einer Leerlaufdiode, einer Endstufe, von Steckern, von Kabeln, eines Messwiderstands usw. sowie deren thermische Abhängigkeiten berücksichtigt. Weiterhin können alle Parameter der pulsweitenmodulierten (PWM) Ansteuerung, wie bspw. eine Batteriespannung, eine Durchlassspannung der Leerlaufdiode, ein Tastverhältnis und der Strom, der im Stromkreis der Zumesseinheit fließt, berücksichtigt werden.

Bei dem Verfahren kann u. a. ein Stromregler im Stromkreis der Zumesseinheit verwendet werden, der eine Abweichung eines Ist-Stroms von einem Soll-Strom der Zumesseinheit ausregelt, indem das Tastverhältnis der Endstufe der Zumesseinheit variiert wird.

In Ausgestaltung der Erfindung wird der Widerstand in Richtung einer abfallenden Spulenspannung umgerechnet, was physikalisch auf Grundlage des Ohmschen Gesetzes durchführbar ist. Weiterhin kann die Temperatur der Spule der Zumesseinheit unter Berücksichtigung des Widerstands des Stromkreises und des Anteils des Widerstands der Spule innerhalb des Stromkreises auf analytischem Weg berechnet werden. Dabei wird typischerweise ein analytischer Ansatz eines Wärmeaustausches vom Kraftstoff zur Spule verwendet, so dass kein Offsetwert zwischen den Temperaturen des Kraftstoffs und der Spule zu berücksichtigen ist.

Die Temperatur des Kraftstoffs wird in der Regel über bekannte und leicht messbare Parameter der Einspritzanlage, bspw. über die Widerstände und/oder Temperaturen der genannten Bauteile des Stromkreises der Zumesseinheit, berechnet. Hierzu wird der gesamte Widerstand des Stromkreises der Zumesseinheit gemessen und ein Anteil eines Widerstands der Spule an dem gesamten Widerstand des Stromkreises berechnet, wobei die Temperatur der Spule aus dem Anteil des Widerstands der Spule an dem gesamten Widerstand des Stromkreises berechnet wird. Aus der Temperatur der Spule kann die Temperatur des Kraftstoffs ermittelt werden.

Bei einem Betrieb der Einspritzanlage fließt der Kraftstoff durch eine Hochdruckpumpe, in die ein Schieber der Zumesseinheit hineinragt. Dabei wird Wärme des Kraftstoffs über den Schieber auf die Spule der Zumesseinheit übertragen. Durch den Wärmetransport verändert die Spule aufgrund ihres thermischen Zustands ihren elektrischen Widerstand. Diese Veränderung des Widerstands kann von einem Steuergerät durch seine Stromregelung bei der Ansteuerung der Zumesseinheit detektiert und aus der Veränderung des Widerstands die Temperatur des Kraftstoffs bestimmt werden. Somit kann ein Temperatursensor für den Kraftstoff inklusive seiner Verkabelung entfallen, wodurch Bauraum und Gewicht eingespart werden können. Durch den Verzicht auf den in der Regel für Fehler anfälligen Temperatursensor kann die Zuverlässigkeit der Einspritzanlage erhöht werden. Außerdem kann mit der Erfindung ein dennoch vorhandener Temperatursensor bei einer Onboard-Diagnose überwacht werden.

Es ist auch möglich, die Temperatur des Kraftstoffs über eine Funktion FTE (Fuel Temperature Emulation) zum Emulieren und/oder Nachbilden der Temperatur abzuschätzen, die auf Betriebsparametern der Zumesseinheit (ZME) der Einspritzanlage in Verbindung mit einer Ansteuerung der Einspritzanlage basiert. Um eine Genauigkeit dieser Funktion FTE zu erhöhen, umfasst diese in Ausgestaltung der Erfindung nunmehr eine Initialisierung der gesamten Bauteile eines Stromkreises der Zumesseinheit.

Durch eine bei einer Umsetzung der Erfindung durchgeführte zusätzliche Initialisierung auf Grundlage der Funktion FTE wird bestimmt, welche Bauteile im Stromkreis der Zumesseinheit Abweichungen von einem Widerstand verursachen und/oder von einer derartigen Abweichung betroffen sind. Durch diese Maßnahme ist es möglich, eine mit der Funktion FTE durchgeführte Berechnung zu optimieren und somit eine Genauigkeit der Funktion FTE zu erhöhen.

Mit der hier beschriebenen Erweiterung der Funktion FTE um die Initialisierung kann in der Regel jeder Anteil des Toleranz-Widerstands anteilsmäßig nach einer Endstufe, einer Diode und weiteren Komponenten der Zumesseinheit, üblicherweise der Spule, mit einem größten Anteil aufgeteilt werden. Durch diese Maßnahme ist es möglich, eine Berechnungsgenauigkeit der Temperatur des Kraftstoffs systematisch zu erhöhen.

In weiterer Ausgestaltung der Erfindung kann über die pulsweitenmodulierte Ansteuerung eine Trennung der Berechnung der Spannung der Spule in zwei Zeitbereiche und somit Phasen vorgenommen werden. Für eine Anschaltphase, in der die Batteriespannung die Spule versorgt, kann die über die Spule abfallende Spannung $U_{Spule,an}$ über Gleichung (1) unter Berücksichtigung von Widerständen von Bauteilen des Stromkreises der Zumesseinheit, hier von einem Kabelbaum ($R_{Kabelbaum}$), einem Stecker ($R_{stecker}$), einem Messwiderstand ($R_{Messwiderstand}$) und einer Endstufe ($R_{Endstufe}$), berechnet werden, wobei weiterhin ein durch den Stromkreis der Zumesseinheit fließender Strom berücksichtigt wird,

$$U_{Spule,an} = Batteriespannung - (R_{Kabelbaum} + R_{Stecker} + R_{Messwiderstand} + R_{Endstufe}) * Strom$$

$$(1)$$

Hierbei ist auch nachfolgend angeführte Gleichung (6) zu berücksichtigen.

Für eine Ausschaltphase, in der die Batterie über einen Schalter von der Spule getrennt ist, kann die über die Spule abfallende Spannung $U_{Spule,aus}$ über Gleichung (2) unter Berücksichtigung einer Spannung einer Diode berechnet werden, wobei ebenfalls Widerstände von Bauteilen des Stromkreises der Zumesseinheit berücksichtigt werden:

$$U_{Spule,aus} = -Diodenspannung - (R_{Kabelbaum} + R_{Stecker} + R_{Meßwiderstand}) * Strom , \qquad (2)$$

Hierbei ist auch nachfolgend angeführte Gleichung (7) zu berücksichtigen.

Die insgesamt während beider Zeitbereiche an der Spule der Zumesseinheit abfallende Spannung $U_{Spule}$ der Spule ist dann:

$$U_{Spule} = U_{Spule,an} * (Tastverhältnis) + U_{Spule,aus} * (1 - Tastverhältnis) \qquad (3)$$

Dabei ist vorgesehen, dass die Spannungen $U_{Spule,an}$ und $U_{Spule,aus}$ als gepulste Signale mit einer Länge T einer Periode und einer Länge t eines Pulses während einer Periode bereitgestellt werden. Das Tastverhältnis ergibt sich dabei aus dem Quotienten t/T der Länge t des Pulses durch die Länge T der Periode.

Der Widerstand $R_{Spule}$ der Spule ergibt sich als:

$$R_{Spule} = \frac{U_{Spule}}{Strom} \qquad (4)$$

Bei diesem Wert handelt es sich um den Widerstand $R_{Spule}$, den die Spule der Zumesseinheit tatsächlich aufweist. Der Widerstand $R_{Spule}$ der Spule kann als Anteil des gemessenen, gesamten Widerstands des Stromkreises der Zumesseinheit berechnet werden. Der Widerstand $R_{Spule}$ der Spule umfasst den elektrischen Soll-Widerstand $R_{Spule,soll}$, den die Spule nach Fertigungsvorgabe besitzen sollte, den Toleranz-Widerstand $R_{Spule,Toleranz}$, um den der Widerstand der Spule fertigungsbedingt vom Sollwert abweicht, und den thermischen Widerstand $R_{thermisch}$, den die Spule aufgrund ihres thermischen Zustands aufweist. Somit gilt:

$$R_{Spule} = R_{Spule,soll} + R_{Spule,Toleranz} + R_{thermisch} \tag{5}$$

Analog zu dem Widerstand der Spule laut Gleichung (5) ergeben sich ein Widerstand $R_{Endstufe}$ der Endstufe in Gleichung (6) und ein Widerstand einer Durchlassspannung $U_{Diode}$ durch die Diode aus Gleichung (7) aus jeweiligen Sollwerten $R_{Spule,soll}$, $R_{Endstufe,soll}$, $U_{Diode,soll}$ für diese Größen $R_{Spule}$, $R_{Endstufe}$, $U_{Diode}$ sowie toleranzbedingten Abweichungen $R_{Spule,Toleranz}$, $R_{Endstufe,Toleranz}$, $U_{Diode,Toleranz}$ für die Größen, die sich bspw. aufgrund von fertigungsspezifischen oder zulieferspezifischen Einflüssen ergeben können.

$$R_{Endstufe} = R_{Endstufe,soll} + R_{Endstufe,Toleranz} \tag{6}$$

$$U_{Diode} = U_{Diode,soll} + U_{Diode,Toleranz} \tag{7}$$

Die Temperatur $T_{Spule}$ der Spule wird über den thermischen elektrischen Widerstand der Spule der Zumesseinheit berechnet, wobei alpha ein von der Induktivität und demnach dem Material der Spule abhängiger Temperaturkoeffizient ist:

$$T_{Spule} = (\frac{R_{thermisch} + R_{Spule,soll} + R_{Spule,Toleranz}}{R_{Spule,soll} + R_{Spule,Toleranz}} - 1) * \frac{1}{alpha} + 20°C \tag{8}$$

Da die Spule der Zumesseinheit bezüglich ihres elektrischen Widerstands fertigungsbedingt toleranzbehaftet sein kann, wird ihr exemplarspezifischer Toleranz-Widerstand $R_{Spule,Toleranz}$ ermittelt. Weiterhin ist vorgesehen, eine exemplarspezifische Durchlassspannung durch die Diode sowie einen exemplarspezifischen Widerstand der Endstufe, die ggf. toleranzbehaftet sein können, zur Erhöhung einer Genauigkeit gegenüber der Funktion FTE zu ermitteln. Sobald sich die Spule der Zumesseinheit bei abgestelltem Verbrennungsmotor in einem thermisch bekannten Zustand befindet, bspw. nach sehr langer Abstellzeit des Kraftfahrzeugs unmittelbar nach einem Bestromungsbeginn der Zumesseinheit, wird ihr exemplarspezifischer Toleranz-Widerstand $R_{Spule,Toleranz}$ unter Berücksichtigung des Ansatzes: $T_{Spule} = T_{ZME} = T_{Motor}$ = bekannt, gelernt und/oder berechnet.

In diesem Fall wird angenommen, dass die Temperaturen der Spule, der Zumesseinheit ($T_{ZME}$) und des Motors ($T_{Motor}$) gleich sind. Dabei gilt in Ausgestaltung bspw. $T_{Motor}$ = 20 °C. Es kann jedoch auch eine andere geeignete Temperatur verwendet werden, bei der die genannten Temperaturen $T_{Spule}$, $T_{ZME}$ und $T_{Motor}$ gleich sind. Bei den vorgesehenen zeitlichen und thermischen Verhältnissen ist die Abweichung des Toleranz-Widerstands $R_{Spule,Toleranz}$ vom elektrischen Soll-Widerstand $R_{Spule,soll}$ nur fertigungsbedingt und verursacht keinen thermisch bedingten Unterschied. Zudem wird der thermische Widerstandsanteil, der bei diesem Initialisierungsansatz ebenfalls Abweichungen verursachen kann, sobald die Initialisierung nicht bei 20°C stattfindet, mittels der Gleichung (9) kompensiert:

$$R_{thermisch,Init} = \lfloor (T_{Spule} - 20°C) * alpha + 1) \rfloor * R_{Spule,soll} - R_{Spule,soll} \tag{9}$$

$R_{thermisch,Init}$ ist also der Anteil, der den Toleranz-Widerstand der Spule von der bekannten Spulentemperatur auf 20°C kompensiert.

Die Bestimmung des Toleranz-Widerstands erfolgt dann mit:

$$R_{Spule,Toleranz} = R_{Spule} - R_{Spule,soll} - R_{thermisch,Init} \tag{10}$$

Demnach kann die Temperatur der Spule mit Gleichung (8) aus einem Widerstand der Spule in Gleichung (5) berechnet werden, der den Soll-Widerstand, den Toleranz-Widerstand und den thermischen Widerstand umfasst.

Zur weiteren Berechnung wird ein exemplarspezifischer Widerstandswert $R_{Spule,Toleranz}$ der Zumesseinheit zusammen mit den anderen exemplarspezifischen Toleranzanteilen berechnet. Hierbei werden Gleichung (1) und (2) und Gleichung (3) zusammen mit Gleichung (6) und (7) in Gleichung (4) und in Gleichung (5) eingesetzt.

$$R_{thermisch} + R_{Spule,Toleranz} + R_{Endstufe,Toleranz} * Tastverh\ddot{a}ltnis + \frac{U_{Diode,Toleranz}}{Strom} * (1 - Tastverh\ddot{a}ltnis) =$$

$$\frac{U_{Batterie} * Tastverh\ddot{a}ltnis}{Strom} - (R_{Kabelbaum} + R_{Stecker} + R_{Messwiderstand}) - R_{Endstufe} * Tastverh\ddot{a}ltnis -$$

$$\frac{U_{Diode,soll}}{Strom}(1 - Tastverh\ddot{a}ltnis) \tag{11}$$

$$R_{Toleranz,Strom1} = \frac{U_{Batterie} * Tastverh\ddot{a}ltnis1}{Strom1} - (R_{Kabelbaum} + R_{Stecker} + R_{Messwiderstand}) -$$

$$R_{Endstufe} * Tastverh\ddot{a}ltnis1 - \frac{U_{Diode,soll}}{Strom1}(1 - Tastverh\ddot{a}ltnis1) - R_{thermisch,Init} \tag{12}$$

wobei Gleichung (9) für $R_{thermisch,Init}$ berücksichtigt wird.

Ein thermischer Widerstandsanteil, der bei einem anhand der vorgestellten Gleichungen (11) und (12) vorgestellt wird und ebenfalls aufgrund von Abweichungen verursacht werden kann, ist bspw. mittels der voranstehend genannten Gleichung (8) kompensierbar. Ein Ergebnis ist ein gesamter Toleranzinitialisierungswert bei einem ersten Stromniveau Strom1.

Analog wird für mindestens ein weiteres Stromniveau Strom2, Strom3, bspw. für ein oder zwei weitere Stromniveaus Strom2, Strom3 ein Toleranzinitialisierungswert bestimmt, was bspw. zu einem Zeitpunkt einer Einstellung eines Stellerschutzes der Zumesseinheit, d. h. wenn die Klemme K 15 an und der Verbrennungsmotor aus ist. Dabei ergeben sich nachfolgende drei Gleichungen:

$$R_{Toleranz,Strom1} = R_{Spule,Toleranz} + R_{Endstufe,Toleranz} * Tastverh\ddot{a}ltnis1 + \frac{U_{Diode,Toleranz}}{Strom1} * (1 - Tastverh\ddot{a}ltnis1) \tag{13}$$

$$R_{Toleranz,Strom2} = R_{Spule,Toleranz} + R_{Endstufe,Toleranz} * Tastverh\ddot{a}ltnis2 + \frac{U_{Diode,Toleranz}}{Strom1} * (1 - Tastverh\ddot{a}ltnis2) \tag{14}$$

$$R_{Toleranz,Strom3} = R_{Spule,Toleranz} + R_{Endstufe,Toleranz} * Tastverh\ddot{a}ltnis3 + \frac{U_{Diode,Toleranz}}{Strom1} * (1 - Tastverh\ddot{a}ltnis3) \tag{15}$$

Die anhand der Gleichungen (13) bis (15) vorgestellten Toleranz-Widerstände $R_{Toleranz,Strom1}$, $R_{Toleranz,Strom2}$ und $R_{Toleranz,Strom3}$ der Stromniveaus Strom1, Strom2 und Strom3 können mit einem Steuergerät ermittelt werden. Weiterhin ist vorgesehen, dass ein Gleichungssystem aus den drei Gleichungen mit den drei unbekannten Toleranz-Werten ($R_{Spule,Toleranz}$, $R_{Endstufe,Toleranz}$ und $U_{Diode,Toleranz}$) als mögliche toleranzbedingte Abweichungen der Größen $R_{Spule}$, $R_{Endstufe}$ und $U_{Diode}$ lösbar ist und in dem Steuergerät berechnet werden kann. Dabei ist es aufgrund einer bekannten Toleranzsituation auch möglich, zumindest eine Gleichung (13) bis (15) für einen Toleranz-Widerstand $R_{Toleranz,Strom1}$, $R_{Toleranz,Strom2}$, $R_{Toleranz,Strom3}$ eines Stromniveaus Strom1, Strom2, Strom3 zugunsten eines Bedarfs an Speicherplatz und Rechenzeit wegzulassen und eine Toleranz der Endstufe nicht zu berechnen. Stattdessen ist es vorgesehen, eine Durchlassspannung durch die Diode aufgrund bekannter Einflussfaktoren wie Temperatur, Strom und Zulieferer zu initialisieren. Die ermittelten Toleranzanteile stellen Widerstandsverhältnisse des Stromkreises der Zumesseinheit aufgrund ihrer zeitlichen Einflüsse über das Tastverhältnis besser als die einzelnen Initialisierungswerte bei der Funktion FTE dar, wodurch eine Ermittlungsgenauigkeit für die Temperatur des Kraftstoffs erhöht werden kann. Außerdem ist eine Initialisierung der Toleranz-Werte $R_{Spule,Toleranz}$, $R_{Endstufe,Toleranz}$ und $U_{Diode,Toleranz}$ unter Umständen einmalig über eine Laufzeit des Verbrennungsmotors ausreichend.

Es ist üblicherweise ausreichend, die Initialisierung des Werts des Toleranz-Widerstands $R_{Spule,Toleranz}$ über eine Laufzeit der Zumesseinheit einmalig vorzunehmen. Der gelernte Toleranz-Widerstand der Spule der Zumesseinheit wird in einem bspw. als EEPROM ausgebildeten Speicher eines Steuergeräts gespeichert. Für zukünftige Betrachtungen des Widerstands im Stromkreis der Zumesseinheit, z. B. bei Fahrzeugstarts, wird der gelernte und gespeicherte Toleranz-Widerstand $R_{Spule,Toleranz}$ der Spule der Zumesseinheit berücksichtigt.

In Ausgestaltung der Erfindung können verschiedene Werte für einen Wärmeaustausch und demnach eine Wärmeübertragung verschiedener Komponenten der Einspritzanlage berücksichtigt werden. Es gilt für den Wärmeaustausch zwischen der Spule und dem Motorraum:

$$Q_{Motorraum} = \frac{T_{Spule} - T_{Motorraum}}{R_{thermisch,Motoraum}} \qquad (16)$$

Der Wärmeaustausch zwischen der Spule und der Hochdruckpumpe entspricht:

$$Q_{Pumpe} = \frac{T_{Spule} - T_{Pumpe}}{R_{thermisch,Pumpe}} \qquad (17)$$

Der Wärmeaustausch zwischen der Spule und dem Kraftstoff ist:

$$Q_{Kraftstoff} = \frac{T_{Spule} - T_{Kraftstoff}}{R_{thermisch,Kraftstoff}} \qquad (18)$$

Die Spule wird durch eine pulsweitenmodulierte Ansteuerung vom Steuergerät elektrisch aufgeheizt. Somit gilt für den elektrischen Wärmeaustausch:

$$Q_{elektrisch} = Strom^2 * R_{Spule} \qquad (19)$$

Dabei ist $T_{Spule}$ die Temperatur der Spule, $R_{Spule}$ der elektrische Widerstand der Spule, $T_{Pumpe}$ die Temperatur der Hochdruckpumpe, $T_{Motorraum}$ die Temperatur des Motorraums. Die drei Größen $R_{thermisch,Motorraum}$, $R_{thermisch,Pumpe}$ und $R_{thermisch,Kraftstoff}$ stellen den thermischen Widerstand beim Wärmeübergang von der Spule zur betreffenden Position dar (Einheit °C/W).

Als Wärmeerhaltungsgleichung ergibt sich an der Spule der Zumesseinheit:

$$Q_{elektrisch} = Q_{Motorraum} + Q_{Kraftstoff} + Q_{Pumpe} \qquad (20)$$

Folglich wird aus der berechneten Temperatur $T_{Spule}$ der Spule durch weitere Korrekturen, die sich durch einen fahrzeugtypspezifischen Wärmeaustausch zwischen der Hochdruckpumpe, dem Motorraum und der Zumesseinheit sowie deren Spule, bspw. der Wärmeaustausch innerhalb der Zumesseinheit, ergeben, die Temperatur des Kraftstoffs ermittelt.

Die derart ermittelte Temperatur des Kraftstoffs kann analog der bisherigen Vorgehensweise im Steuergerät, bspw. zur Regelung von Einspritzungen durch die Einspritzanlage, verwendet werden.

Mit allen thermodynamischen Gleichungen (16) - (20) ergibt sich für die Temperatur des Kraftstoffs:

$$T_{Kraftstoff} = T_{Spule} - R_{thermisch,Kraftstoff} * (R_{Spule} * Strom^2 - \frac{T_{Spule} - T_{Pumpe}}{R_{thermisch,Pumpe}} - \frac{T_{Spule} - T_{Motorraum}}{R_{thermisch,Motorraum}})$$

$$(21)$$

In Gleichung (21) fließt u. a. die Temperatur $T_{Spule}$ aus Gleichung (8) ein, die aus dem elektrischen Widerstand der Spule aus Gleichung (5) errechnet wird. Sie umfasst die Widerstände $R_{thermisch}$ und $R_{Spule,Toleranz}$, die wiederum Widerstände von Bauteilen des Stromkreises der Zumesseinheit sind. Die Temperatur der Spule wird demnach aus dem Anteil des Widerstands der Spule am gesamten Widerstand des Stromkreises der Zumesseinheit berechnet.

Die zur Berechnung der Temperatur $T_{Kraftstoff}$ benötigten Temperaturen und Widerstände können vorab ermittelt sowie verfahrensbegleitend berechnet und/oder durch Thermometer sowie elektrische Messgeräte gemessen werden.

Die erfindungsgemäße Anordnung ist dazu ausgebildet, sämtliche Schritte des vorgestellten Verfahrens durchzuführen. Dabei können einzelne Schritte dieses Verfahrens auch von einzelnen Komponenten der Anordnung durchgeführt werden. Weiterhin können Funktionen der Anordnung oder Funktionen von einzelnen Komponenten der Anordnung als Schritte des Verfahrens umgesetzt werden. Außerdem ist es möglich, dass Schritte des Verfahrens als Funktionen wenigstens einer Komponente der Anordnung oder der gesamten Anordnung realisiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen

Figur 1     zeigt in schematischer Darstellung eine Ausführungsform einer erfindungsgemäßen Anordnung.
Figur 2     zeigt in schematischer Darstellung ein Detail eines Schaltkreises einer Zumesseinheit.

Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

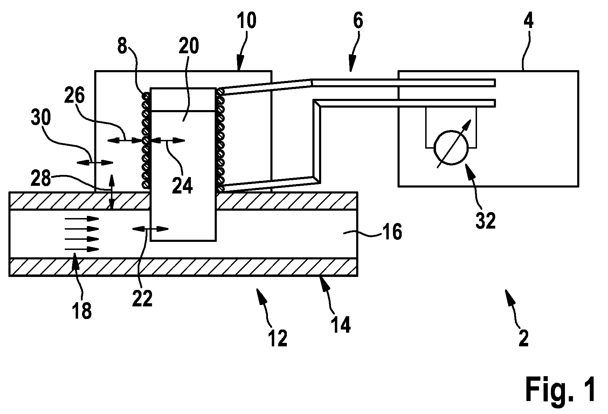

Die in Figur 1 schematisch dargestellte erste Ausführungsform einer erfindungsgemäßen Anordnung 2 umfasst ein Steuergerät 4, mit dem eine Ausführungsform des erfindungsgemäßen Verfahrens durchzuführen ist. Dabei ist dieses Steuergerät 4 über Kabel 6 mit einer Spule 8 einer Zumesseinheit 10 einer Einspritzanlage 12 eines Kraftfahrzeugs verbunden. Von der Einspritzanlage 12 ist in Figur 1 weiterhin eine Hochdruckpumpe 14 zur Förderung von Kraftstoff schematisch dargestellt. Der Kraftstoff strömt durch einen Kanal 16 der Hochdruckpumpe 14, was in Figur 1 ist durch vier Pfeile 18 angedeutet ist.

Bei einer Bestromung der Spule 8, die ausgehend von dem Steuergerät 4 über die Kabel 6 erfolgen kann, wird durch die Spule 8 der Zumesseinheit 10 ein magnetisches Feld induziert, durch das eine Position eines Schiebers 20, der zumindest teilweise in den Kanal 16 der Hochdruckpumpe 14 hineinragt, verändert wird. Durch Positionierung des Schiebers 20 ist es möglich, eine Größe eines Querschnitts des Kanals 16 zu regulieren und somit eine Menge des Kraftstoffs, der durch den Kanal 16 der Hochdruckpumpe 14 fließt, durch die Zumesseinheit 10 zuzumessen.

In Figur 1 sind jeweils durch Doppelpfeile Gradienten für einen Wert eines ersten Wärmeaustausches 22 zwischen dem Kraftstoff und dem Schieber, für einen Wert eines zweiten Wärmeaustausches 24 zwischen dem Schieber 20 und der Spule 8, für einen Wert eines dritten Wärmeaustausches 26 zwischen der Zumesseinheit 10 und der Spule 8, für einen vierten Wert eines Wärmeaustausches 28 zwischen der Hochdruckpumpe 14 und der Zumesseinheit 10 sowie für einen Wert eines fünften Wärmeaustausches 30 zwischen einem Motorraum des Verbrennungsmotors des Kraftfahrzeugs und der Zumesseinheit 10 dargestellt. Die genannten Werte für den Wärmeaustausch können im Rahmen des Verfahrens ebenfalls berücksichtigt werden.

Weiterhin zeigt Figur 1 ein elektrisches Messgerät 32 als eine Komponente des Steuergeräts 4, mit dem zur Bestimmung der Temperatur des Kraftstoffs im Rahmen des erfindungsgemäßen Verfahrens zumindest ein elektrischer Parameter, d. h. ein Strom und/oder eine Spannung, der Zumesseinheit 10 eines Stromkreises der Zumesseinheit 10 und/oder der Spule 8 ermittelt werden kann.

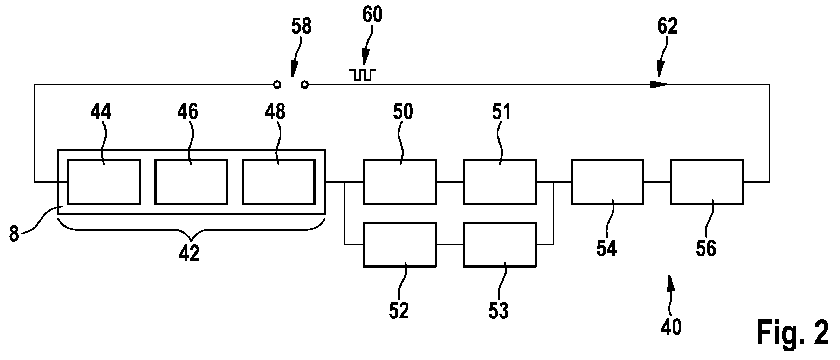

In Figur 2 ist der Stromkreis 40 der anhand von Figur 1 vorgestellten Zumesseinheit 10 schematisch dargestellt.

Dieser Stromkreis 40 umfasst einen realen Widerstand 42 R$_{Spule}$ der Spule 8, der wiederum einen Soll-Widerstand 44 R$_{Spule,soll}$ der Spule 8, einen Toleranz-Widerstand 46 R$_{spule,Toleranz}$ der Spule 8 sowie einen thermischen Widerstand 48 R$_{Spule,thermisch}$ der Spule 8 umfasst. Weiterhin umfasst der Stromkreis 40 der Zumesseinheit 10 einen Widerstand 50 R$_{Endstufe}$ der Endstufe und einen Toleranz-Widerstand 51 R$_{Endstufe,Toleranz}$ der Endstufe (nur während der Anschaltphase, in der die Batterie 58 die Spule 8 aus Figur 1 versorgt, wobei ein zeitlicher Anteil einem Tastverhältnis entspricht) sowie einen dazu parallel geschalteten Widerstand 52 R$_{Diode}$ der Diode und einen Toleranz-Widerstand 53 R$_{Diode,Toleranz}$ der Diode (nur während der Abschaltphase, in der die Batterie 58 durch einen Schalter von der Spule 8 aus Figur 1 getrennt ist, wobei ein zeitlicher Anteil: 1-Tastverhältnis ist). Außerdem umfasst der Stromkreis 40 einen Restwiderstand 54 R$_{Rest}$, der den Widerstand eines Kabelbaums R$_{Kabelbaum}$ und mindestens eines Steckers R$_{stecker}$ umfasst, sowie einen Nebenanschlusswiderstand 56 bzw. Messshuntwiderstand R$_{Shunt}$. Diese genannten Widerstände von Bauteilen des Stromkreises 40 können zur Bestimmung der Temperatur des Kraftstoffs berücksichtigt werden. Der Stromkreis 40 der Zumesseinheit 10 ist an einer Batterie 58 angeschlossen, die den Stromkreis 40 mit einer pulsweitenmodulierten Ansteuerung 60 versorgt, so dass durch den Stromkreis 40 ein Strom 62 I$_{ZME}$ der Zumesseinheit 10 fließt.

Bei Ausführung des erfindungsgemäßen Verfahrens wird die Temperatur des Kraftstoffs in der Einspritzanlage 12 in Abhängigkeit einer Temperatur der Spule 8 der Zumesseinheit 10 und unter Berücksichtigung des Widerstands im Stromkreis 40 der Zumesseinheit 10 bestimmt. Der gesamte Widerstand des Stromkreises der Zumesseinheit wird durch das Steuergerät 4 gemessen. Weiterhin berechnet das Steuergerät 4 einen Anteil eines Widerstands R$_{Spule}$ der Spule 8 an dem gesamten Widerstand des Stromkreises 40. Die Temperatur der Spule 8 wird von dem Steuergerät 4 aus dem Anteil des Widerstands R$_{Spule}$ der Spule 8 an dem gesamten Widerstand des Stromkreises 40 berechnet.

Weiterhin können bei Ausführung des Verfahrens eine an der Spule 8 während einer Anschaltphase anliegende Spannung und eine während einer Ausschaltphase an der Spule 8 anliegenden Spannung U$_{Spule,aus}$ sowie Tastverhältnisse berücksichtigt werden.

## Patentansprüche

1.  Verfahren zum Bestimmen einer Temperatur von Kraftstoff in einer Einspritzanlage (12), bei dem die Temperatur des Kraftstoffs in Abhängigkeit einer Temperatur einer Spule (8) einer Zumesseinheit (10) der Einspritzanlage (12) ermittelt wird, wobei ein gesamter Widerstand des Stromkreises (40) der Zumesseinheit (10) gemessen und ein Anteil eines Widerstands der Spule (8) an dem gesamten Widerstand des Stromkreises (40) berechnet wird, und wobei die Temperatur der Spule (8) aus dem Widerstand der Spule (8) berechnet wird, wobei berücksichtigt wird, dass der gesamte Widerstand des Stromkreises (40) der Zumesseinheit (10) Widerstände einzelner Bauteile des Stromkreises (40) umfasst, nämlich den Widerstand der Spule (8), einen Widerstand (50) einer Endstufe, einen Toleranz-Widerstand (51) der Endstufe, einen Widerstand (52) einer Diode, einen Toleranz-Widerstand (53) der Diode, einen Restwiderstand (54), einen Widerstand eines Kabelbaums, einen Widerstand eines Steckers und/oder einen Nebenanschlusswiderstand (56) wobei berücksichtigt wird, dass der Widerstand der Spule (8) einen Soll-Widerstand (44) R$_{Spule,soll}$ der Spule (8), einen Toleranz-Widerstand (46) R$_{Spule,Toleranz}$ der Spule (8) und einen thermischen Widerstand (48) R$_{Spule,thermisch}$ der Spule (8) umfasst, und dass der Toleranz-Widerstand (46) R$_{Spule,Toleranz}$ bei abgestelltem Verbrennungsmotor und thermisch bekannten Bedingungen bestimmt wird.

2.  Verfahren nach Anspruch 1, bei dem jeweils eine an der Spule (8) anliegende Spannung während einer Anschaltphase und einer Ausschaltphase unter Berücksichtigung eines Tastverhältnisses verwendet wird.

3.  Verfahren nach einem der voranstehenden Ansprüche, bei dem ein Wert für einen Wärmeaustausch zwischen der Spule (8) und einem Motorraum, zwischen der Spule (4) und einer Hochdruckpumpe (14), zwischen dem Kraftstoff und der Hochdruckpumpe (14), zwischen einem Schieber (20) der Zumesseinheit (10) und der Spule (8), zwischen dem Kraftstoff und dem Schieber (20) und/oder zwischen der Zumesseinheit (10) und der Hochdruckpumpe (14) berücksichtigt wird.

4.  Verfahren nach einem der voranstehenden Ansprüche, bei dem zum Berechnen der Temperatur T$_{Kraftstoff}$ des Kraftstoffs folgende Gleichung verwendet wird:

$$T_{Kraftstoff} = T_{Spule} - R_{thermisch,Kraftstoff} * ( R_{Spule} * Strom^2 - \frac{T_{Spule} - T_{Pumpe}}{R_{thermisch,Pumpe}} - \frac{T_{Spule} - T_{Motorraum}}{R_{thermisch,Motorraum}} )$$

wobei T$_{Spule}$ die Temperatur der Spule (8), R$_{Spule}$ der elektrische Widerstand der Spule (8), T$_{Pumpe}$ die Temperatur der Hochdruckpumpe (14) und T$_{Motorraum}$ die Temperatur des Motorraums ist, wobei die drei Größen

$R_{thermisch,Motorraum}$, $R_{thermisch,Pumpe}$ und $R_{thermisch,Kraftstoff}$ thermische Widerstände bei einem Wärmeübergang von der Spule (8) zur betreffenden Position darstellen (Einheit °C/W), und wobei ein durch den Stromkreis (40) der Zumesseinheit (10) fließender Strom berücksichtigt wird.

5. Anordnung zum Bestimmen einer Temperatur von Kraftstoff in einer Einspritzanlage (12), wobei die Anordnung (2) ein Steuergerät (2) aufweist, das die Temperatur des Kraftstoffs in Abhängigkeit einer Temperatur einer Spule (8) einer Zumesseinheit (10) der Einspritzanlage (12) ermittelt, einen gesamten Widerstand des Stromkreises (40) der Zumesseinheit (10) misst und einen Anteil eines Widerstands der Spule (8) an dem gesamten Widerstand des Stromkreises (40) berechnet, wobei das Steuergerät (2) die Temperatur der Spule (8) aus dem Widerstand der Spule (8) berechnet, wobei berücksichtigt wird, dass der gesamte Widerstand des Stromkreises (40) der Zumesseinheit (10) Widerstände einzelner Bauteile des Stromkreises (40) umfasst, nämlich den Widerstand der Spule (8), einen Widerstand (50) einer Endstufe, einen Toleranz-Widerstand (51) der Endstufe, einen Widerstand (52) einer Diode, einen Toleranz-Widerstand (53) der Diode, einen Restwiderstand (54), einen Widerstand eines Kabelbaums, einen Widerstand eines Steckers und/oder einen Nebenanschlusswiderstand (56), und berücksichtigt, dass der Widerstand der Spule (8) einen Soll-Widerstand (44) $R_{Spule,soll}$ der Spule (8), einen Toleranz-Widerstand (46) $R_{Spule,Toleranz}$ der Spule (8) und einen thermischen Widerstand (48) $R_{Spule,thermisch}$ der Spule (8) umfasst, und der Toleranz-Widerstand (46) $R_{Spule,Toleranz}$ bei abgestelltem Verbrennungsmotor und thermisch bekannten Bedingungen bestimmt wird.

## Claims

1. Method for determining a temperature of fuel in an injection system (12), in which method the temperature of the fuel is obtained as a function of a temperature of a coil (8) of a metering unit (10) of the injection system (12), wherein a total resistance of the circuit (40) of the metering unit (10) is measured and a proportion of the total resistance of the circuit (40) which is formed by the resistance of the coil (8) is calculated, and wherein the temperature of the coil (8) is calculated from the resistance of the coil (8), wherein it is taken into account that the total resistance of the circuit (40) of the metering unit (10) comprises resistances of individual components of the circuit (40), specifically the resistance of the coil (8), a resistance (50) of an output stage, a tolerance resistance (51) of the output stage, a resistance (52) of a diode, a tolerance resistance (53) of the diode, a residual resistance (54), a resistance of a cable harness, a resistance of a plug and/or a shunt resistance (56), wherein it is taken into account that the resistance of the coil (8) comprises a reference resistance (44) $R_{coil,ref}$ of the coil (8), a tolerance resistance (46) Rcoil, tolerance of the coil (8) and a thermal resistance (48) $R_{coil,thermal}$ of the coil (8), and in that the tolerance resistance (46) $R_{coil,\ tolerance}$ is determined when the internal combustion engine is shut down and under known thermal conditions.

2. Method according to Claim 1, in which in each case a voltage which is present at the coil (8) is used during a switch-on phase and switch-off phase while taking into account a pulse duty factor.

3. Method according to one of the preceding claims, in which a value of an exchange of heat between the coil (8) and an engine compartment, between the coil (4) and a high-pressure pump (14), between the fuel and the high-pressure pump (14), between a slider (20) of the metering unit (10) and the coil (8), between the fuel and the slider (20) and/or between the metering unit (10) and the high-pressure pump (14) is taken into account.

4. Method according to one of the preceding claims, in which the following equation is used to calculate the temperature $T_{fuel}$ of the fuel:

$$T_{fuel} = T_{coil} - R_{thermal,fuel} * (R_{coil} * current^2 - \frac{T_{coil} - T_{pump}}{R_{thermal,pump}} - \frac{T_{coil} - T_{engcomp}}{R_{thermal,engcomp}})$$

wherein $T_{coil}$ is the temperature of the coil (8), $R_{coil}$ is the electrical resistance of the coil (8), $T_{pump}$ is the temperature of the high-pressure pump (14), and Tengcomp is the temperature of the engine compartment, wherein the three variables $R_{thermal,engcomp}$, $R_{thermal,pump}$ and $R_{thermal,fuel}$ constitute thermal resistances during a transfer of heat from the coil (8) to the respective position (Unit °C/H), and wherein a current which flows through the circuit (40) of the metering unit (10) is taken into account.

5. Arrangement for determining a temperature of fuel in an injection system (12), wherein the arrangement (2) has a control unit (2) which obtains the temperature of the fuel as a function of a temperature of a coil (8) of a metering unit (10) of the injection system (12), measures a total resistance of the circuit (40) of the metering unit (10) and calculates a proportion of the total resistance of the circuit (40) which is formed by the resistance of the coil (8), wherein the control unit (2) calculates the temperature of the coil (8) from the resistance of the coil (8), wherein it is taken into account that the total resistance of the circuit (40) of the metering unit (10) comprises resistances of individual components of the circuit (40), specifically the resistance of the coil (8), a resistance (50) of an output stage, a tolerance resistance (51) of the output stage, a resistance (52) of a diode, a tolerance resistance (53) of the diode, a residual resistance (54), a resistance of a cable harness, a resistance of a plug and/or a shunt resistance (56), and takes into account the fact that the resistance of the coil (8) comprises a reference resistance (44) $R_{coil,ref}$ of the coil (8), a tolerance resistance (46) $R_{coil,tolerance}$ of the coil (8), and a thermal resistance (48) $R_{coil,thermal}$ of the coil (8), and the tolerance resistance (46) $R_{coil,tolerance}$ is determined when the internal combustion engine is shut down and under known thermal conditions.

**Revendications**

1. Procédé pour déterminer une température de carburant dans un système d'injection (12), selon lequel la température du carburant est déterminée en fonction d'une température d'une bobine (8) d'une unité de dosage (10) du système d'injection (12), une résistance totale du circuit électrique (40) de l'unité de dosage (10) est mesurée et une part d'une résistance de la bobine (8) à la résistance totale du circuit électrique (40) est calculée, et la température de la bobine (8) étant calculée à partir de la résistance de la bobine (8), le fait que la résistance totale du circuit électrique (40) de l'unité de dosage (10) comprend les résistances des composants individuels du circuit électrique (40), à savoir la résistance de la bobine (8), une résistance (50) d'un étage final, une résistance de tolérance (51) de l'étage final, une résistance (52) d'une diode, une résistance de tolérance (53) de la diode, une résistance résiduelle (54), une résistance d'un faisceau de câbles, une résistance d'une fiche et/ou une résistance d'une connexion secondaire (56) étant pris en compte, le fait que la résistance de la bobine (8) comprend une résistance de consigne (44) $R_{Spule,soll}$ de la bobine (8), une résistance de tolérance (46) $R_{Spule,Toleranz}$ de la bobine (8) et une résistance thermique (48) $R_{Spule,thermisch}$ de la bobine (8), et que la résistance de tolérance (46) $R_{Spule,Toleranz}$ est déterminée lorsque le moteur à combustion interne est arrêté et sous des conditions thermiques connues étant pris en compte.

2. Procédé selon la revendication 1, selon lequel une tension respectivement appliquée à la bobine (8) est utilisée pendant une phase de mise en circuit et une phase de mise hors circuit en tenant compte d'un rapport cyclique.

3. Procédé selon l'une des revendications précédentes, selon lequel une valeur pour un échange de chaleur entre la bobine (8) et un compartiment moteur, entre la bobine (4) et une pompe à haute pression (14), entre le carburant et la pompe à haute pression (14), entre un curseur (20) de l'unité de dosage (10) et la bobine (8), entre le carburant et le curseur (20) et/ou entre l'unité de dosage (10) et la pompe à haute pression (14) est prise en compte.

4. Procédé selon l'une des revendications précédentes, selon lequel l'équation suivante est utilisée pour calculer la température $T_{Kraftstoff}$ du carburant :

$$T_{Kraftstoff} = T_{Spule} - R_{thermisch,Kraftstoff} \\ * \left( R_{Spule} * Courant^2 - \frac{T_{Spule} - T_{Pumpe}}{R_{thermisch,Pumpe}} \right. \\ \left. - \frac{T_{Spule} - T_{Motorraum}}{R_{thermisch,Motorraum}} \right),$$

où $T_{Spule}$ désigne la température de la bobine (8), $R_{Spule}$ la résistance électrique de la bobine (8), $T_{Pumpe}$ la température de la pompe à haute pression (14) et $T_{Motorraum}$ la température du compartiment moteur, les trois grandeurs $R_{thermisch,Motorraum}$, $R_{thermisch,Pumpe}$ et $R_{thermisch,Kraftstoff}$ représentent les résistances thermiques lors d'un transfert de chaleur de la bobine (8) vers la position concernée (unité °C/W), et un courant qui circule à travers le circuit électrique (40) de l'unité de dosage (10) étant pris en compte.

5. Arrangement pour déterminer une température de carburant dans un système d'injection (12), l'arrangement (2) possédant un contrôleur (2) qui détermine la température du carburant en fonction d'une température d'une bobine (8) d'une unité de dosage (10) du système d'injection (12), mesure une résistance totale du circuit électrique (40) de l'unité de dosage (10) et calcule une part d'une résistance de la bobine (8) à la résistance totale du circuit électrique (40), le contrôleur (2) calculant la température de la bobine (8) à partir de la résistance de la bobine (8), le fait que la résistance totale du circuit électrique (40) de l'unité de dosage (10) comprend les résistances des composants individuels du circuit électrique (40), à savoir la résistance de la bobine (8), une résistance (50) d'un étage final, une résistance de tolérance (51) de l'étage final, une résistance (52) d'une diode, une résistance de tolérance (53) de la diode, une résistance résiduelle (54), une résistance d'un faisceau de câbles, une résistance d'une fiche et/ou une résistance d'une connexion secondaire (56) étant pris en compte, et tient compte du fait que la résistance de la bobine (8) comprend une résistance de consigne (44) $R_{Spule,soll}$ de la bobine (8), une résistance de tolérance (46) $R_{Spule,Toleranz}$ de la bobine (8) et une résistance thermique (48) $R_{Spule,\,thermisch}$ de la bobine (8), et la résistance de tolérance (46) $R_{Spule,Toleranz}$ est déterminée lorsque le moteur à combustion interne est arrêté et sous des conditions thermiques connues.

Fig. 1

Fig. 2

EP 2 681 433 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19946910 A1
- DE 102008014085 A1
- US 20100125400 A